# EUROPEAN PATENT APPLICATION

(11) **EP 4 422 228 A1**
(43) Date of publication of application: **28.08.2024**
(21) Application number: 22888950.7
(22) Date of filing: 22.08.2022
(51) Int. Cl.: H04W 4/70, H04W 74/08

(54) **COMMUNICATION METHOD AND DEVICE**

(30) Priority: 05.11.2021 CN 202111303422
(71) Applicant: Huawei Technologies Co., Ltd., Shenzhen, Guangdong 518129 (CN)
(72) Inventor: LI, Chenwan, Shenzhen, Guangdong 518129 (CN); WU, Yiling, Shenzhen, Guangdong 518129 (CN); TANG, Yujian, Shenzhen, Guangdong 518129 (CN)
(74) Representative: Isarpatent
(86) International application number: PCT/CN2022/113815
(87) International publication number: WO 2023/077917

(57) **Abstract**

This application provides a communication method and device. The method includes: Inventory indication information sent by a network device to a terminal device includes information for determining a target terminal device. The inventory indication information indicates that the network device selects the target terminal device to initiate a random access request, or the inventory indication information indicates that the network device supports the target terminal device in initiating a random access request. In this way, the network device may select, based on target terminal devices of different types or target terminal devices having different capabilities, a target device to perform random access, thereby improving random access efficiency of a second device and performance of subsequent data transmission of the target terminal device.

## Description

This application claims priority to Chinese Patent Application No. 202111303422.2, filed with the China National Intellectual Property Administration on November 5, 2021 and entitled "COMMUNICATION METHOD AND DEVICE", which is incorporated herein by reference in its entirety.

### TECHNICAL FIELD

This application relates to the communication field, and more specifically, to a communication method and device.

### BACKGROUND

A radio frequency identification (radio frequency identification, RFID) technology is a non-contact automatic identification technology. An RFID system generally includes a reader (reader), a tag (tag), and a data management system. Automatic identification on static or moving objects can be implemented by using a radio frequency signal and spatial coupling and transmission characteristics of the radio frequency signal. RFID can be used to trace and manage management objects in many fields. The RFID is characterized by high accuracy, a long reading distance, a large capacity for storing data, high durability, and the like, and is widely applied to product production, logistics, sales, and other stages.

Usually, based on a power supply manner, the RFID may be classified into three types: passive RFID, active RFID, and semi-active RFID. However, in the conventional technology, after random access of a tag succeeds, capability information of the tag may be sent to a reader. In other words, random access efficiency of the tag is low, and consequently performance of subsequent data transmission is poor.

### SUMMARY

This application provides a communication method and device. First indication information includes information for determining a target second device, so that a first device may select, based on target second devices of different types or target second devices having different capabilities, a target second device to perform random access. This improves efficiency of random access between the second device and the first device. In addition, the first device may configure data transmission of the second device based on first information, to improve performance of subsequent data transmission.

According to a first aspect, a communication method is provided. The method includes: A second device receives first indication information from a first device. The first indication information includes first information, the first information is used to determine a target second device, and the first information includes at least one or more of the following: first type information of the target second device, polar encoding information of the target second device, and authentication registration information of the target second device. The first indication information indicates that the first device selects the target second device to initiate a random access request, or the first indication information indicates that the first device supports the target second device in initiating a random access request; and the target second device is a second device meeting one or more pieces of information in the first information. When the second device is the target second device, the second device initiates a random access request to the first device.

In this application, the first information may further include other characteristic information such as mask information, flag bit information, identification information, and the like of the target second device.

In this application, that the target second device is a second device meeting one or more of the first information may be understood as that the target second device meets a condition that is in the first information and that is for selecting or supporting the target second device.

In this application, when the first information includes a plurality of pieces of information, the second device may meet only a selection condition of one piece of information to become the target second device; or the second device may meet selection conditions of a plurality of pieces of information to become the target second device.

In this application, there may be one or more second devices. The one or more second devices may receive the first indication information sent by the first device. The first indication information may include information for determining the target second device. In other words, during subsequent random access, the determined target second device may initiate the random access request.

It should be understood that, in this application, a second device mentioned in the following possible implementations may be understood as the target second device that can perform random access.

In this application, a first type of the target second device includes one or more of the following: an active type, a passive type, and a semi-passive type.

In this application, that the first indication information indicates that the first device supports the target second device in initiating a random access request may also be understood as that the first device not only supports the target second device in initiating the random access request, but also supports another second device in initiating a random access request.

In this application, the first indication information may be, for example, inventory indication information (which may also be understood as inventory signaling). For example, the signaling may be select (select) signaling, query (query) signaling, paging signaling, or other signaling sent by the first device.

In this application, that a terminal supports a "polar encoding" capability may also be understood as that the terminal supports a "polar encoding and decoding" capability.

It should be noted that in this application, the second device may be a terminal device. For example, the second device is an electronic tag. For example, the second device is RedCap UE. For another example, the second device is an internet of things device, or the like. The first device in this application may be a reader, a network device, an internet of things device, or the like.

Based on the foregoing technical solution, the first indication information includes the information for determining the target second device, so that the first device may select, based on target second devices of different types or target second devices having different capabilities, the target second device to perform random access. In this way, the first device may select the second device to perform random access. This improves random access efficiency. In addition, the first device may configure data transmission of the second device based on the first information, to improve performance of subsequent data transmission.

In an implementation, when sending the first indication information, the second device may further send first configuration information. The first configuration information may be determined based on the first indication information, and the first configuration information is used to configure information used by the second device to perform subsequent data transmission.

In another implementation, the first indication information sent by the second device includes the first configuration information.

In this application, the first indication information and the first configuration information may be one message, or may be a plurality of messages.

For example, the first configuration information may include authentication registration indication information, polar code application indication information, and rate configuration indication information that are configured by the first device for the second device to perform subsequent data transmission.

For example, the authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

Subsequently, during data transmission, the second device may directly perform data transmission by using a corresponding configuration as the configuration information indicates. After random access succeeds, the second device does not need to wait for the configuration information of the first device. This improves network configuration flexibility, reduces a data transmission delay, and increases a data transmission rate.

In an implementation, when the first indication information indicates that the first device selects the target second device to initiate random access, the first type information of the target second device indicates that the first device selects the first-type second device to initiate a random access request; the polar encoding information of the target second device indicates that the first device selects to support a second device having a polar encoding capability in initiating a random access request; and the authentication registration information of the target second device indicates that the first device selects to support a second device having an authentication registration capability in initiating a random access request.

In an implementation, the authentication registration information of the target second device may also indicate that the selected target second device may perform an authentication registration procedure after the successful random access.

In an implementation, when the first indication information indicates that the first device supports the target second device in performing random access, the type information of the target second device indicates that the first device supports a first-type second device in initiating a random access request; the polar encoding information of the target second device indicates that the first device supports a second device having a polar encoding capability in initiating a random access request; and the authentication registration information of the target second device indicates that the first device supports a second device having an authentication registration capability in initiating a random access request.

Based on the foregoing technical solution, in this application, the first device may select, by sending the first indication information, the target second device to perform random access, or indicate to support the target second device in performing random access, so that packet access of an electronic tag is implemented.

In an implementation, that the second device initiates random access to the first device includes: The second device sends a first message to the first device, to perform random access. The first message includes capability information of the second device, and the capability information includes one or more of the following: first type information of the second device, information about whether the second device supports polar encoding, and information about whether the second device supports authentication registration.

In this application, the first message may be, for example, a random access request message or a response message of the first indication information. A specific name of the first message is not limited in this application.

In an implementation, the method further includes: The second device sends capability information to the first device. The capability information includes one or more of the following: first type information of the second device, information about whether the second device supports polar encoding, and information about whether the target second device supports authentication registration.

Based on the foregoing technical solution, in this application, during random access, the target second device may further report the capability information of the target second device, so that the first device promptly obtains the capability information of the target second device, and can promptly determine, based on the capability information of the target second device, configuration information needed for data transmission. For example, in a passive internet of things scenario, a data transmission process is simple. Therefore, capability information is reported as early as possible, so that data transmission performance can be improved and data transmission reliability can be ensured.

In an implementation, the method further includes: The second device receives configuration information from the first device. The configuration information is determined by the first device based on the first indication information and/or the capability information, and the configuration information is used to configure information used by the second device to perform data transmission or signaling transmission.

In an implementation, the configuration information includes at least one of the following: authentication registration indication information, polar code application indication information, and rate configuration indication information. The authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

Based on the foregoing technical solution, in this application, the first device may determine the configuration information of the target second device based on the indication information and/or the capability information, so that the first device can enable different procedures, configure different parameters, or the like based on target second devices having different capabilities or target second devices of different types, and the target second device better perform data transmission. In this way, the data transmission performance is improved.

In an implementation, that the second device receives configuration information from the first device includes: The second device receives a second message from the first device. The second message includes the configuration information, and the second message is specifically a conflict resolution message or an acknowledgment message of the random access request.

Based on the foregoing technical solution, in this application, the configuration information may be flexibly carried in each piece of signaling.

According to a second aspect, a communication method is provided. The method includes: A second device receives second indication information from a first device. The second indication information indicates the second device to initiate a random access request. The second device sends a first message to the first device, to perform random access. The first message includes capability information of the second device, and the capability information includes one or more of the following: type information of the second device, information about whether the second device supports polar encoding, and information about whether the second device supports authentication registration.

The second device in the foregoing technical solution may be understood as a group of second devices selected by the first device, for example, a second device that meets some conditions and that can perform random access.

In the foregoing technical solution, the second indication information may also be understood as a trigger message of a network device. Once the network device sends the trigger message, the second device may perform random access.

Based on the foregoing technical solution, in this application, the second device may actively report the capability information in a random access process, so that the first device promptly obtains the capability information of the target second device, and the first device can promptly perform corresponding configuration based on a capability of the second device. For example, in a passive internet of things scenario, a data transmission process is simple. Therefore, capability information is reported as early as possible, so that data transmission performance can be improved and data transmission reliability can be ensured.

In an implementation, the type information of the second device indicates that a type of the second device is a first type, polar encoding information of the second device indicates that the second device supports the polar encoding, and authentication registration information of the second device indicates that the second device supports the authentication registration.

In an implementation, the method further includes: The second device receives configuration information from the first device. The configuration information is determined by the first device based on the capability information, and the configuration information is used to configure information used by the second device to perform data transmission.

In an implementation, the configuration information includes at least one of the following: authentication registration indication information, polar code application indication information, and rate configuration indication information. The authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

Based on the foregoing technical solution, in this application, before performing service data transmission, the second device may first report the capability information, so that a reader can promptly obtain capability information of a terminal and perform corresponding configuration. In this way, transmission performance and transmission reliability are improved.

In an implementation, that the second device receives configuration information from the first device includes: The second device receives a second message from the first device. The second message includes the configuration information, and the first message is specifically a conflict resolution message or an acknowledgment message of the random access request.

In this application, the configuration information may be flexibly carried in each piece of signaling.

According to a third aspect, a communication method is provided. The method includes: A first device sends first indication information to a second device. The first indication information includes first information, the first information is used to determine a target second device, and the first information includes at least one or more of the following: first type information of the target second device, polar encoding information of the target second device, and authentication registration information of the target second device. The first indication information indicates that the first device selects the target second device to initiate random access, or the first indication information indicates that the first device supports the target second device in initiating random access; and the target second device is a second device meeting one or more pieces of information in the first information. The first device receives a random access request from the target second device. The second device is the target second device.

In an implementation, when the first indication information indicates that the first device selects the target second device to initiate the random access, the first type information of the target second device indicates that the first device selects a first-type second device to initiate a random access request; the polar encoding information of the target second device indicates that the first device selects to support a second device having a polar encoding capability in initiating a random access request; and the authentication registration information of the target second device indicates that the first device selects a second device having an authentication registration capability to initiate a random access request.

In an implementation, when the first indication information indicates that the first device supports the target second device in performing the random access, the first type information of the target second device indicates that the first device supports a first-type second device in initiating a random access request; the polar encoding information of the target second device indicates that the first device supports a second device having a polar encoding capability in initiating a random access request; and the authentication registration information of the target second device indicates that the first device supports a second device having an authentication registration capability in initiating a random access request.

In an implementation, that the first device receives a random access request from the second device includes: The first device receives a first message from the second device. The first message includes capability information of the second device, and the capability information includes one or more of the following: type information of the second device, information about whether the second device supports polar encoding, and information about whether the second device supports authentication registration.

In an implementation, after the second device successfully performs random access, the method further includes: The first device receives the capability information from the second device. The capability information includes one or more of the following: the type information of the second device, the information about whether the second device supports the polar encoding, and the information about whether the second device supports the authentication registration.

In an implementation, the method further includes: The first device determines configuration information based on the first indication information and/or the capability information. The configuration information is used to configure information used by the second device to perform data transmission or signaling transmission. The first device sends the configuration information to the second device.

In an implementation, the configuration information includes at least one of the following: authentication registration indication information, polar code application indication information, and rate configuration indication information. The authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

In an implementation, that the first device sends the configuration information to the second device includes: The first device sends a second message to the second device. The second message includes the configuration information, and the second message is specifically a conflict resolution message or an acknowledgment message of the random access request.

In an implementation, a first type of the target second device includes one or more of the following: an active type, a passive type, and a semi-passive type.

According to a fourth aspect, a communication method is provided. The method includes: A first device sends second indication information to a second device. The second indication information indicates the second device to initiate a random access request. The first device receives a first message from the second device. The first message includes capability information of the second device, and the capability information includes one or more of the following: type information of the second device, information about whether the second device supports polar encoding, and information about whether the second device supports authentication registration.

In an implementation, the type information of the second device indicates that a type of the second device is a first type, polar encoding information of the second device indicates that the second device supports the polar encoding, and authentication registration information of the second device indicates that the second device supports the authentication registration.

In an implementation, the method further includes: The first device determines configuration information based on the capability information. The configuration information is used to configure information used by the second device to perform data transmission. The first device sends the configuration information to the second device.

In an implementation, the configuration information includes at least one of the following: authentication registration indication information, polar code application indication information, and rate configuration indication information. The authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

In an implementation, that the first device sends the configuration information to the second device includes: The first device sends a second message to the second device. The second message includes the configuration information, and the first message is specifically a conflict resolution message or an acknowledgment message.

In an implementation, a first type of the target second device includes one or more of the following: an active type, a passive type, and a semi-passive type.

According to a fifth aspect, a communication device is provided. The device includes a transceiver unit. The transceiver unit is configured to receive first indication information. The first indication information includes first information, the first information is used to determine a target second device, and the first information includes at least one or more of the following: first type information of the target second device, polar encoding information of the target second device, and authentication registration information of the target second device. The first indication information indicates that the first device selects the target second device to initiate a random access request, or the first indication information indicates that the first device supports the target second device in initiating a random access request; and the target second device is a second device meeting one or more pieces of information in the first information. When the second device is the target second device, the transceiver unit is further configured to initiate a random access request to the first device.

In an implementation, when the first indication information indicates that the first device selects the target second device to initiate random access, the first type information of the target second device indicates that the first device selects a first-type second device to initiate a random access request; the polar encoding information of the target second device indicates that the first device selects to support a second device having a polar encoding capability in initiating a random access request; and the authentication registration information of the target second device indicates that the first device selects a second device having an authentication registration capability to initiate a random access request.

In an implementation, when the first indication information indicates that the first device supports the target second device in performing random access, the type information of the target second device indicates that the first device supports a first-type second device in initiating a random access request; the polar encoding information of the target second device indicates that the first device supports a second device having a polar encoding capability in initiating a random access request; and the authentication registration information of the target second device indicates that the first device supports a second device having an authentication registration capability in initiating a random access request.

In an implementation, that the transceiver unit is configured to initiate random access to the first device includes: The transceiver unit sends a first message to the first device, to perform random access. The first message includes capability information of the target second device, and the capability information includes one or more of the following: type information of the second device, information about whether the second device supports polar encoding, and information about whether the second device supports authentication registration.

In an implementation, the transceiver unit is configured to send capability information to the first device. The capability information includes one or more of the following: type information of the target second device, information about whether the target second device supports polar encoding, and information about whether the target second device supports authentication registration.

In an implementation, the transceiver unit is configured to receive configuration information from the first device. The configuration information is determined by the first device based on the first indication information and/or the capability information, and the configuration information is used to configure information used by the second device to perform data transmission or signaling transmission.

In an implementation, the configuration information includes at least one of the following: authentication registration indication information, polar code application indication information, and rate configuration indication information. The authentication registration indication information indicates that the second device needs to initiate a registration procedure to a core network during data transmission; the polar code application indication information indicates that the target second device uses a polar code to perform data transmission during uplink data and/or downlink data transmission; and the rate configuration indication information indicates an information transmission rate or code rate used by the second device during uplink data and/or downlink data transmission.

In an implementation, that the transceiver unit is configured to receive configuration information from the first device includes: The transceiver unit is configured to receive a second message from the first device. The second message includes the configuration information, and the second message is specifically a conflict resolution message or an acknowledgment message of the random access request.

In an implementation, a first type of the target second device includes one or more of the following: an active type, a passive type, and a semi-passive type.

According to a sixth aspect, a communication device is provided. The device includes a transceiver unit. The transceiver unit is configured to receive second indication information. The second indication information indicates the second device to initiate a random access request. The transceiver unit is further configured to send a first message, to perform random access. The first message includes capability information of the second device, and the capability information includes one or more of the following: type information of the second device, information about whether the second device supports polar encoding, and information about whether the second device supports authentication registration.

In an implementation, the type information of the second device indicates that a type of the second device is a first type, polar encoding information of the second device indicates that the device supports the polar encoding, and authentication registration information of the second device indicates that the second device supports the authentication registration.

In an implementation, the transceiver unit is configured to receive configuration information. The configuration information is determined by the first device based on the capability information, and the configuration information is used to configure information used by the second device to perform data transmission.

In an implementation, the configuration information includes at least one of the following: authentication registration indication information, polar code application indication information, and rate configuration indication information. The authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

In an implementation, that the transceiver unit is configured to receive configuration information from the first device includes: The transceiver unit is configured to receive a second message from the first device. The second message includes the configuration information, and the first message is specifically a conflict resolution message or an acknowledgment message.

In an implementation, a type of the target second device includes one or more of the following: an active type, a passive type, and a semi-passive type.

According to a seventh aspect, a communication device is provided. The device includes a transceiver unit. The transceiver unit is configured to send first indication information. The first indication information includes first information, the first information is used to determine a target second device, and the first information includes at least one or more of the following: first type information of the target second device, polar encoding information of the target second device, and authentication registration information of the target second device. The first indication information indicates that the first device selects the target second device to initiate random access, or the first indication information indicates that the first device supports the target second device in initiating random access; and the target second device is a second device meeting one or more pieces of information in the first information. The transceiver unit is further configured to receive a random access request from the second device. The second device is the target second device.

In an implementation, when the first indication information indicates that the first device selects the target second device to initiate the random access, the type information of the target second device indicates that the first device selects a first-type second device to initiate a random access request; the polar encoding information of the target second device indicates that the first device selects to support a second device having a polar encoding capability in initiating a random access request; and the authentication registration information of the target second device indicates that the first device selects a second device having an authentication registration capability to initiate a random access request.

In an implementation, when the first indication information indicates that the first device supports the target second device in performing the random access, the first type information of the target second device indicates that the first device supports a first-type second device in initiating a random access request; the polar encoding information of the target second device indicates that the first device supports a second device having a polar encoding capability in initiating a random access request; and the authentication registration information of the target second device indicates that the first device supports a second device having an authentication registration capability in initiating a random access request.

In an implementation, that the transceiver unit is configured to receive a random access request from the second device includes: The transceiver unit is configured to receive a first message from the second device. The first message includes capability information of the second device, and the capability information includes one or more of the following: type information of the second device, information about whether the second device supports polar encoding, and information about whether the second device supports authentication registration.

In an implementation, the transceiver unit is configured to receive the capability information from the second device. The capability information includes one or more of the following: the type information of the second device, the information about whether the second device supports the polar encoding, and the information about whether the second device supports the authentication registration.

In an implementation, the device further includes a processing unit. The processing unit is configured to determine configuration information based on the first indication information and/or the capability information. The configuration information is used to configure information used by the second device to perform data transmission or signaling transmission. The transceiver unit is configured to send the configuration information to the second device.

In an implementation, the configuration information includes at least one of the following: authentication registration indication information, polar code application indication information, and rate configuration indication information. The authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

In an implementation, that the transceiver unit is configured to send the configuration information to the target second device includes: The transceiver unit is configured to send a second message to the target second device. The second message includes the configuration information, and the second message is specifically a conflict resolution message or an acknowledgment message of the random access request.

In an implementation, a first type of the target second device includes one or more of the following: an active type, a passive type, and a semi-passive type.

According to an eighth aspect, a communication device is provided. The device includes a transceiver unit. The transceiver unit is configured to send second indication information. The second indication information indicates the second device to initiate a random access request. The transceiver unit is further configured to receive a first message from the second device. The first message includes capability information of the second device, and the capability information includes one or more of the following: type information of the second device, information about whether the second device supports polar encoding, and information about whether the second device supports authentication registration.

In an implementation, the type information of the second device indicates that a type of the second device is a first type, polar encoding information of the second device indicates that the second device supports the polar encoding, and authentication registration information of the second device indicates that the second device supports the authentication registration.

In an implementation, the device further includes a processing unit. The processing unit is configured to determine configuration information based on the capability information. The configuration information is used to configure information used by the second device to perform data transmission. The transceiver unit is configured to send the configuration information to the second device.

In an implementation, the configuration information includes at least one of the following: authentication registration indication information, polar code application indication information, and rate configuration indication information. The authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

In an implementation, that the transceiver unit is configured to send the configuration information to the second device includes: The transceiver unit is configured to send a second message to the second device. The second message includes the configuration information, and the first message is specifically a conflict resolution message or an acknowledgment message of the random access request.

In an implementation, a type of the target second device includes one or more of the following: an active type, a passive type, and a semi-passive type.

According to a ninth aspect, a communication device is provided, including a processor. The processor is coupled to a storage, and may be configured to execute instructions in the storage, to implement the method in any one of the possible implementations according to the first aspect or the second aspect. Optionally, the device further includes the storage. Optionally, the device further includes a communication interface, and the processor is coupled to the communication interface.

In an implementation, the device is a terminal device. When the device is the terminal device, the communication interface may be a transceiver or an input/output interface.

In another implementation, the device is a chip disposed in a terminal device. When the device is the chip disposed in the terminal device, the communication interface may be an input/output interface.

In an implementation, the device is a donor node device. When the device is the donor node device, the communication interface may be a transceiver or an input/output interface.

In another implementation, the device is a chip disposed in a donor node. When the device is the chip disposed in the donor node, the communication interface may be an input/output interface. Optionally, the transceiver may be a transceiver circuit. Optionally, the input/output interface may be an input/output circuit.

According to a tenth aspect, a communication device is provided, including a processor. The processor is coupled to a storage, and may be configured to execute instructions in the storage, to implement the method in any one of the possible implementations according to the third aspect or the fourth aspect. Optionally, the device further includes the storage. Optionally, the device further includes a communication interface, and the processor is coupled to the communication interface.

In an implementation, the device is a network device. When the device is the network device, the communication interface may be a transceiver or an input/output interface.

In another implementation, the device is a chip disposed in a network device. When the device is the chip disposed in the network device, the communication interface may be an input/output interface.

In an implementation, the device is a donor node device. When the device is the donor node device, the communication interface may be a transceiver or an input/output interface.

In another implementation, the device is a chip disposed in a donor node device. When the device is the chip disposed in the donor node device, the communication interface may be an input/output interface.

Optionally, the transceiver may be a transceiver circuit. Optionally, the input/output interface may be an input/output circuit.

According to an eleventh aspect, a processor is provided, including an input circuit, an output circuit, and a processing circuit. The processing circuit is configured to receive a signal by using the input circuit, and transmit a signal by using the output circuit, so that the processor performs the method in any one of the possible implementations according to any one of the first aspect to the fourth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a transceiver, and a signal output by the output circuit may be output to, for example, but not limited to, a transmitter and transmitted by the transmitter. The input circuit and the output circuit may be a same circuit, and the circuit is separately used as the input circuit and the output circuit at different moments. Specific implementations of the processor and the various circuits are not limited in an embodiment of this application.

According to a twelfth aspect, a processing device is provided, including a processor and a storage. The processor is configured to read instructions stored in the storage, and may receive a signal by using a transceiver, and transmit a signal by using a transmitter, to perform the method in any one of the possible implementations according to any one of the first aspect to the fourth aspect.

Optionally, there are one or more processors, and there are one or more storages.

Optionally, the storage may be integrated with the processor, or the storage and the processor are separately disposed.

In a specific implementation process, the storage may be a non-transitory (non-transitory) memory, such as a read-only memory (read-only memory, ROM). The storage and the processor may be integrated into a same chip, or may be respectively disposed in different chips. A type of the storage and a manner in which the storage and the processor are disposed are not limited in an embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device according to the twelfth aspect may be one or more chips. The processor in the processing device may be implemented by using hardware or software. When the processor is implemented by using the hardware, the processor may be a logic circuit, an integrated circuit, or the like. When the processor is implemented by using the software, the processor may be a general-purpose processor, and may be implemented by reading software code stored in the storage. The storage may be integrated into the processor, or may be located outside the processor and exist independently.

According to a thirteenth aspect, a computer-readable medium is provided. The computer-readable medium stores a computer program (which may also be referred to as code or instructions). When the computer program is run on a computer, the computer is enabled to perform the method in any one of the possible implementations according to any one of the first aspect to the fourth aspect.

According to a fourteenth aspect, this application provides a computer program product including instructions. When the computer program product runs on a computer, the computer is enabled to execute instructions of the method according to any one of the first aspect to the fourth aspect.

According to a fifteenth aspect, a chip system is provided, including a processor. The processor is configured to invoke a computer program from a storage and run the computer program, so that a device in which the chip system is installed performs the method in any one of the possible implementations according to any one of the first aspect to the fourth aspect.

According to a sixteenth aspect, a communication system is provided. The communication system includes the device in any one of the implementations according to any one of the fifth aspect to the eighth aspect.

### BRIEF DESCRIPTION OF DRAWINGS

FIG. 1 is a diagram of a scenario to which this application is applicable;
FIG. 2 is a diagram of an RFID system according to this application;
FIG. 3 is a flowchart of a communication method 300 according to this application;
FIG. 4 is a flowchart of a communication method 400 according to this application;
FIG. 5 is a flowchart of a communication method 500 according to this application;
FIG. 6 is a block diagram of a communication device 100 according to this application; and
FIG. 7 is a block diagram of a communication device 200 according to this application.

### DESCRIPTION OF EMBODIMENTS

The following describes technical solutions of this application with reference to accompanying drawings.

A wireless communication system to which embodiments of this application may be applied includes but is not limited to a global system of mobile communication (global system of mobile communication, GSM) system, a long term evolution (long term evolution, LTE) frequency division duplex (frequency division duplex, FDD) system, LTE time division duplex (time division duplex, TDD), an LTE system, an advanced long term evolution (LTE-Advanced, LTE-A) system, a next-generation communication system (for example, a 5G communication system), a converged system of a plurality of access systems, or an evolved system (for example, a 6G communication system).

The technical solutions provided in this application may be further applied to machine type communication (machine type communication, MTC), long term evolution-machine (Long Term Evolution-machine, LTE-M), a device to device (device to device, D2D) network, a machine to machine (machine to machine, M2M) network, an internet of things (internet of things, IoT) network, or another network. The IoT network may include, for example, an internet of vehicles. A communication manner in an internet of vehicles system is collectively referred to as vehicle to X (vehicle to X, V2X, where X may represent anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

A terminal device in this application may also be referred to as user equipment (user equipment, UE), a mobile station (mobile station, MS), a mobile terminal (mobile terminal, MT), or the like, and is a device that provides a user with voice and/or data connectivity, for example, a handheld device, a vehicle-mounted device having a wireless connection function, or the like. Currently, some examples of the terminal are: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), and the like.

An access network device in this application may be a radio access network (radio access network, RAN) node (or device) that enables the terminal to access a wireless network, and may also be referred to as a base station. Currently, some examples of the RAN node are: a continuing evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of remaining protocol layers are distributed in the DU, and the CU centrally controls the DU. The access network device may also be a reader device.

A core network device in this application may be a general term of a plurality of function entities used by a network side to manage a user, perform data transmission, and configure a base station, and includes a mobility management function network element (AMF), a user plane function network element (UPF), a session management function network element (SMF), and the like.

As described above, the technical solutions of this application may be applied to a 5G new radio (new radio, NR) system. This application may also be applied to another communication system. For example, an entity in the communication system needs to send transmission direction indication information, and another entity needs to receive the indication information and determine a transmission direction within a period of time based on the indication information.

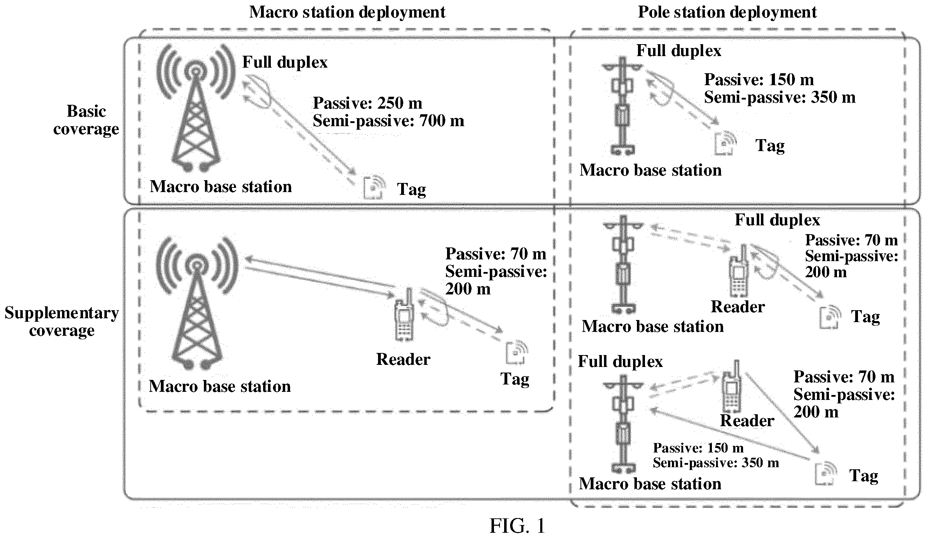

FIG. 1 is a diagram of a scenario to which this application is applicable. As shown in FIG. 1, basic coverage is used as an example. UE is located within a coverage range of one or more cells (which may also be understood as carriers) provided by a base station device, and there may be one or more cells serving the UE. When there are a plurality of cells serving the UE, the UE may work in a carrier aggregation (carrier aggregation, CA), dual connectivity (dual connectivity, DC), or coordinated multiple points (coordinated multiple points, CoMP) transmission manner. At least one cell provides more than one type of numerology, and simultaneously provides radio resources for the UE. Supplementary coverage is used as an example. The UE may also be located within a coverage range provided by a reader (reader), and communication between the reader and the UE may be considered as transmission between a terminal and a terminal. Transmission between the terminal or the reader and a macro base station (which may be referred to as a "macro station") or a pole base station (which may be referred to as a "pole station") is uu interface transmission, that is, air interface transmission.

To facilitate understanding of the technical solutions of this application, the following first briefly describes several technical names in this application.

Radio frequency identification (radio frequency identification, RFID) is a non-contact automatic identification technology. A basic principle of the RFID is to use a radio frequency signal and a transmission characteristic of a spatial coupling (for example, an inductive or electromagnetic coupling) or radar reflection, to implement automatic identification of an identified object. Generally, an identification process may be as follows: After a tag (tag) enters a reader (reader) (or may be understood as a reader), a radio frequency signal sent by the reader is received. The tag may send product information (for example, a passive tag or a passive tag) stored in a chip by using energy obtained by an induced current. Alternatively, a tag actively sends a signal of a frequency (for example, an active tag or an active tag), and after the reader reads and decodes information, the information is sent to a central information system for related data processing.

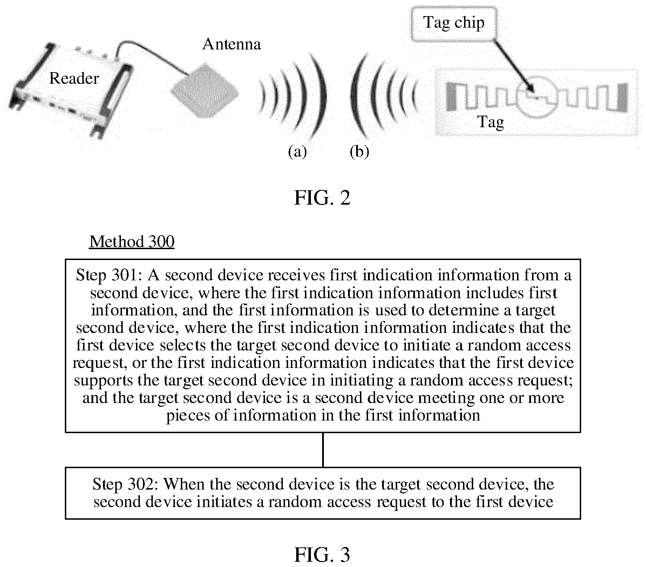

FIG. 2 shows an RFID system. As shown in FIG. 2, a complete RFID system may generally include three parts: a reader, an electronic tag, and a data management system. A working principle is as follows: The reader transmits radio wave energy of a specific frequency to drive a circuit, to send internal data out. In this case, the reader may receive and interpret the data in sequence, and send the data to an application program for corresponding processing.

The RFID reader may perform wireless communication with the RFID electronic tag through an antenna, and may read or write tag identification code and memory data. As shown in (a) in FIG. 2, a typical reader includes a high-frequency module (for example, a transmitter or a receiver), a control unit, and a reader antenna. The RFID reader may also be understood as a device communicating with the tag, and may be in a form of a terminal, a base station, or a device having reading and writing functions.

The electronic tag includes a tag antenna and a tag-specific chip, as shown in (b) in FIG. 2. Generally, the electronic tag may be classified into an active electronic tag (active tag), a passive electronic tag (passive tag), and a semi-passive electronic tag (semi-passive tag) based on different power supply manners of the electronic tag. The active electronic tag is equipped with a battery, a passive radio frequency tag is not equipped with a battery, and the semi-passive electronic tag partly depends on a battery to work. Based on different frequencies, the electronic tag may be classified into a low-frequency electronic tag, a high-frequency electronic tag, an ultrahigh-frequency electronic tag, and a microwave electronic tag. Certainly, classification may also be performed based on different encapsulation forms. Details are not described herein again. The passive tag may also be referred as a passive internet of things (passive Internet of things, IOT) device. Therefore, the RFID electronic tag may also be considered as a terminal.

"Inventory" in this application may be understood as: after an electronic tag receives mask information and flag bit specified by a reader, if information in a storage area of the tag matches the received mask information, and the flag bit stored in the tag is consistent with indication of the reader, the electronic tag may enter an inventory procedure. In other words, the electronic tag initiates random access to the reader, and completes corresponding instructions of the reader.

With rapid development of wireless communication, to meet and enrich increasing requirements of people, a 5th-generation mobile communication (5G) system emerges. In this way, explosive growth of mobile data traffic in the future can be effectively coped with, and massive device connections and various emerging new services can be supported.

As a part of 5G, a market demand for an internet of things (IoT) is growing rapidly. M2M is short for machine-to-machine transfer of information and data by using a wireless network, and is an important direction of IoT development. Existing internet of things technologies include a narrow band (narrow band) internet of things, reduced capability (reduced capacity, RedCap) user equipment, and the like. However, in a conventional technology, a power consumption is still above a milliwatt level, and the power consumption cannot be further reduced. A passive RFID technology can achieve microwatt-level power consumption and ultra-low costs, and becomes an important branch of a future evolution technology of cellular technologies.

As mentioned above, RFID can be used to trace and manage management objects in many fields. RFID is characterized by high accuracy, a long reading distance, a large capacity for storing data, high durability, and the like, and is widely applied to product production, logistics, sales, and other stages. However, an existing reader has a same interaction process for a plurality of tags, and in an inventory process, the reader cannot identify tags of different types. Based on an inventory procedure, capability information of the tag may be sent to the reader only after the tag successfully performs random access. In other words, random access efficiency of the tag is low, and consequently, performance of subsequent data transmission is poor.

In view of this, this application provides a communication method. Different tags may be selected based on a tag type to access a reader, so that efficiency of random access between the tag and the reader is improved. In addition, based on the technical solutions of this application, the reader may use different procedures, configure different parameters, or the like based on tags having different capabilities or tags of different types, to improve data transmission performance.

FIG. 3 shows a method 300 according to this application. As shown in FIG. 3, the method includes the following steps.

Step 301: A second device receives first indication information from a first device. The first indication information includes first information, and the first information is used to determine a target second device.

It may also be understood as that there may be one or more second devices in this application. The one or more second devices may receive the first indication information sent by the first device. The first indication information may include information for determining the target second device. In other words, during subsequent random access, the determined target second device may initiate a random access request.

In this application, the first indication information may be, for example, inventory indication information (which may also be understood as inventory signaling). For example, the signaling may be select (select) signaling, query (query) signaling, paging signaling, or other signaling sent by the first device.

In this application, for example, the first information may include at least one or more of the following: first type information of the target second device, polar encoding information of the target second device, and authentication registration information of the target second device. For example, the first information may further include other characteristic information such as mask information, flag bit information, identification information, and the like of the target second device.

In this application, the first indication information may indicate that the first device selects the target second device to initiate a random access request, or the first indication information may indicate that the first device supports the target second device in initiating a random access request. The target second device is a second device meeting one or more of the first information.

In this application, that the target second device is a second device meeting one or more of the first information may be understood as that the target second device meets a condition that is in the first information and that is for selecting or supporting the target second device.

In this application, when the first information includes a plurality of pieces of information, the second device may meet only a selection condition of one piece of information to become the target second device; or the second device may meet selection conditions of a plurality of pieces of information to become the target second device.

In an example, if the first indication information indicates that the first device selects the target second device to initiate random access, the type information of the target second device may indicate that the first device selects a first-type second device to initiate a random access request; the polar encoding information of the target second device may indicate that the first device selects to support a second device having a polar encoding capability in initiating a random access request; and the authentication registration information of the target second device may indicate that the first device selects to support a second device having an authentication registration capability in initiating a random access request, or all second devices selected to perform access needs to perform an authentication registration procedure.

In another example, if the first indication information specifically indicates the first device supports the target second device in performing random access, the type information of the target second device may indicate that the first device supports a first-type second device in initiating a random access request; the polar encoding information of the target second device may indicate that the first device supports a second device having a polar encoding capability in initiating a random access request; and the authentication registration information of the target second device may indicate that the first device supports a second device having an authentication registration capability in initiating a random access request.

In this application, that the first indication information indicates that the first device supports the target second device in initiating a random access request may also be understood as that the first device not only supports the target second device in initiating the random access request, but also supports another second device in initiating a random access request.

In this application, in an example, when the target second device is an electronic tag, a type of the electronic tag includes one or more of the following: an electronic tag of an active type, an electronic tag of a passive type, and an electronic tag of a semi-passive type.

In an implementation, when sending the first indication information, the second device may further send first configuration information. The first configuration information may be determined based on the first indication information, and the first configuration information is used to configure information or a parameter used by the second device to perform subsequent data transmission.

In another implementation, the first indication information sent by the second device includes the first configuration information.

In this application, the first indication information and the first configuration information may be one message, or may be a plurality of messages.

For example, the first configuration information may include authentication registration indication information, polar code application indication information, and rate configuration indication information that are configured by the first device for the second device to perform subsequent data transmission.

For example, the authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

Subsequently, during data transmission, the second device may directly perform data transmission by using a corresponding configuration as the configuration information indicates. After random access succeeds, the second device does not need to wait for the configuration information of the first device. This improves network configuration flexibility, reduces a data transmission delay, and increases a data transmission rate.

Step 302: When the second device is the target second device, the second device initiates a random access request to the first device.

In this application, the target second device may be determined based on the first indication information. The target second device may initiate the random access request to the first device or send a response message of the first indication information to the first device. The response message indicates that the second device is a second device (which may also be understood as the target second device) meeting a selection condition of the first device.

Based on the foregoing technical solution, in this application, the first device may select, based on target second devices of different types or target second devices having different capabilities, the target second device to perform random access, so that random access efficiency of the second device is improved.

In an implementation, the second device may send a first message to the first device, to perform random access. The first message may include capability information of the second device.

In another implementation, after the second device successfully performs random access, the second device may send the first message to the first device. The first message includes the capability information of the second device.

In this application, the first message may be, for example, RN16 signaling or other uplink signaling.

In this application, the capability information may include one or more of the following: type information of the second device, information about whether the second device supports polar encoding, information about whether the second device supports authentication registration, and the like.

In some embodiments, step 303 may be further included. The second device receives a second message from the first device. The second message includes the configuration information, and the configuration information is determined by the first device based on the first indication information and/or the capability information.

The configuration information in this embodiment may be used to configure information used by the target second device to perform data transmission or signaling transmission.

In this application, the second message may be, for example, a conflict resolution message or an acknowledgment message of the random access request.

In an example, the configuration information may include at least one of the following: authentication registration indication information, polar code application indication information, and rate configuration indication information. The authentication registration indication information may indicate that the second device needs to initiate a registration procedure to a core network during data transmission; the polar code application indication information may indicate that the second device uses a polar code to perform data transmission during uplink data and/or downlink data transmission; and the rate configuration indication information may indicate an information transmission rate or code rate used by the second device during uplink data and/or downlink data transmission.

Based on the foregoing technical solution, in this application, the first device may further use different procedures, configure different parameters, or the like based on second devices having different capabilities or second devices of different types, to improve data transmission performance.

It should be noted that in this application, the second device may be a terminal device. For example, the second device is an electronic tag. For example, the second device is RedCap UE. For another example, the second device is an internet of things device, or the like. The first device in this application may be a reader or a network device, for another example, a passive internet of things (passive iot) device.

In the following embodiments of this application, an example in which the second device is an electronic tag is used for description, and an example in which the first device is a reader is used for description.

It should be noted that descriptions about the "tag" in the following embodiments may be understood as "an electronic tag" or a passive internet of things device.

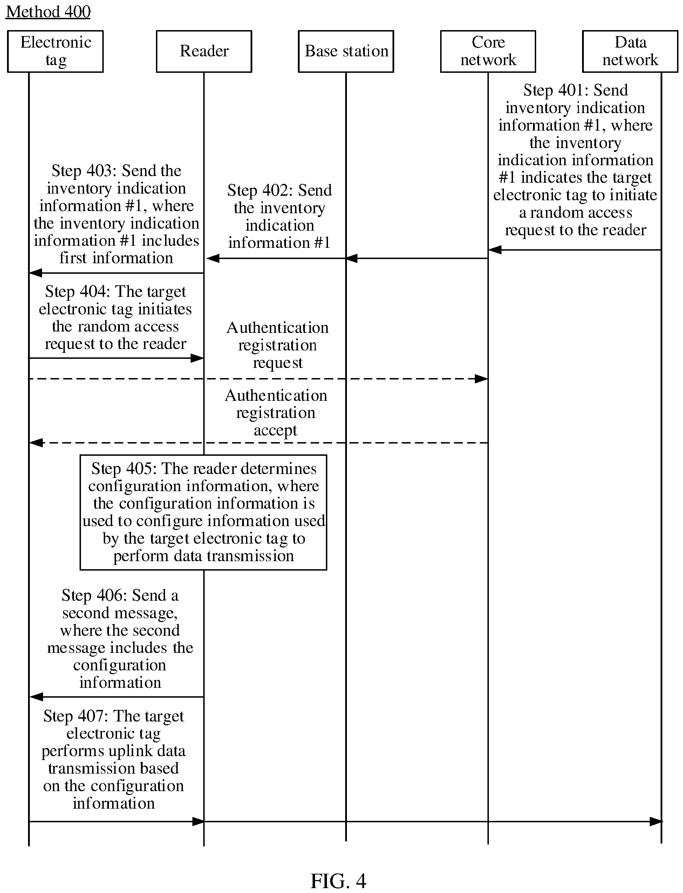

FIG. 4 shows a communication method 400 according to a specific embodiment of this application. As shown in FIG. 4, the method includes the following steps.

Step 401: A data network sends inventory indication information #1 to a core network, where the inventory indication information #1 may indicate a target electronic tag to initiate a random access request to a reader.

Optionally, the inventory indication information #1 may include first information, and the first information is used to determine the target electronic tag.

In this step, in an implementation, the first information may include type information of the target electronic tag. For example, the target electronic tag is an active tag, a passive tag, a semi-passive tag, or the like.

In this step, in an implementation, the first information may further include polar (polar) encoding information. For example, the target electronic tag is a tag supporting polar encoding. Specifically, a polar encoding capability may also be further classified into use of polar in uplink, or support of polar encoding in downlink.

In this step, in another implementation, the first information may further include information about whether the target electronic tag needs authentication registration. For example, during random access, the target electronic tag needs to initiate a registration procedure to the core network.

In an implementation, in addition to the inventory indication information #1, the data network further sends configuration information #1 to the core network. The configuration information #1 may be determined based on first indication information, and the configuration information #1 is used to configure information or a parameter used by the selected tag to perform subsequent data transmission. The indication information #1 and the configuration information #1 may be one message, or may be a plurality of messages. For example, the indication information #1 and the configuration information #1 may be carried in one piece of signaling or respectively in different pieces of signaling for transmission.

In another implementation, the inventory indication information #1 sent by the data network to the core network includes the configuration information #1.

For example, the configuration information #1 may include authentication registration indication information, polar code application indication information, and rate configuration indication information by the data network for the selected tag to perform subsequent data transmission.

For example, the authentication registration indication information indicates that the selected tag needs to initiate a registration procedure to the core network during data transmission; the polar code application indication information indicates that the selected tag uses a polar code to perform data transmission during uplink data and/or downlink data transmission; and the rate configuration indication information indicates an information transmission rate or code rate used by the selected tag during uplink data and/or downlink data transmission.

Subsequently, during data transmission, the selected tag may directly perform data transmission by using a corresponding configuration as the configuration information indicates. After the random access succeeds, the selected tag does not need to wait for configuration information of a network device. This improves network configuration flexibility, reduces a data transmission delay, and increases a data transmission rate.

For example, a specific implementation may be as follows.

In an example, the inventory indication information#1 may include passive tag type information of the target electronic tag. In a possible implementation, it indicates that the reader only selects a passive tag to initiate access to the reader, or only selects a passive tag meeting a specific condition to initiate access to the reader. In another possible implementation, the passive tag type information may indicate that the reader may support access of a passive tag, in other words, the passive tag can access the reader, and implicitly indicate that access of a tag of another type may also be supported. For example, the reader also supports access of an active tag or a semi-passive tag.

In an example, the inventory indication information #1 may include semi-passive tag type information of the target electronic tag. In a possible implementation, it indicates that the reader only selects a semi-passive tag to initiate access to the reader, or only selects a semi-passive tag meeting a specific condition to initiate access to the reader. In another possible implementation, the semi-passive tag type information may indicate that the reader supports access of a semi-passive tag, in other words, the semi-passive tag can access the reader, and implicitly indicate that access of a tag of another type may also be supported.

In an example, the inventory indication information #1 may further include polar encoding information of the target electronic tag. In a possible implementation, it indicates that the reader selects an electronic tag supports polar encoding to initiate access to the reader, or the reader only selects an electronic tag that meets a specific condition and that supports polar encoding to initiate access to the reader. In another possible implementation, the polar encoding information indicates that the reader supports access of an electronic tag supports polar encoding, in other words, the tag supporting the polar encoding can access the reader, and implicitly indicate that access of an electronic tag of another type may also be supported.

In another example, the inventory indication information #1 may further include authentication indication information of the target electronic tag. In a possible implementation, whether a registration procedure is needed may be bound to a type of the target electronic tag. For example, if the inventory indication information #1 includes passive tag type information of the target electronic tag, it indicates that the tag does not need an authentication registration procedure. If the inventory indication information #1 includes semi-passive tag type information of the target electronic tag, it indicates that a tag of this type needs to perform an authentication registration procedure. Specifically, the binding may be a relationship specified in a protocol. In another possible implementation, whether the target electronic tag needs a registration procedure may be combined with a tag type of the target electronic tag. For example, if the inventory indication information #1 includes information about the registration procedure, a passive electronic tag does not need to perform a registration procedure, and a semi-passive electronic tag needs to perform a registration procedure. If the inventory indication information #1 does not include information about an authentication registration procedure, both a passive tag and a semi-passive tag do not need registration procedures. In an implementation, that the inventory indication information #1 includes the authentication indication information of the target electronic tag indicates that all tags (which may also be understood as target electronic tags) selected to perform access need to perform the authentication registration procedure.

It should be noted that, in this application, a condition for selecting a target second device is not limited to the foregoing described cases, and there may be other cases. A person skilled in the art may flexibly set the condition based on actual cases. In addition, a combination of a plurality of conditions may be supported. For example, a first device may select a tag that is a passive electronic tag and whose identifier corresponds to a value greater than 100 to perform random access.

It should be understood that, information sent by the first device may alternatively indicate, by carrying capability information or not carrying capability information, that a function is supported or not supported, or is selected or not selected; or may indicate, by setting a field, for example, "true" (true) or "false" (or false), that a function is supported or not supported, or is selected or not selected. Further, when the tag performs reporting, if the capability information is carried, it indicates that a capability is supported, or if the capability information is not carried, it indicates that a capability is not supported.

In this application, the data network may also be understood as an application layer. In other words, the application layer sends the inventory indication information #1 to the core network.

Step 402: After receiving the inventory indication information #1 from the data network, the core network forwards the indication information #1 to the reader.

In an example, the core network may first send the inventory indication information #1 to a base station, and then the base station forwards the inventory indication information #1 to the reader. If the reader is the base station, the core network may directly send the inventory indication information #1 to the reader.

Optionally, the inventory indication information #1 sent by the core network may include the first information. The first information is used to determine the target second device, and the first information may include at least one or more of the following information: the type information of the target electronic tag, the polar encoding information of the target electronic tag, and the information about whether the target electronic tag needs authentication registration.

Step 403: After receiving the inventory indication information #1, the reader sends the inventory indication information #1 to the electronic tag.

In this step, the inventory indication information #1 may include the first information. The first information is used to determine the target second device, and the first information may include at least one or more of the following information: the type information of the target electronic tag, the polar encoding information of the target electronic tag, and the information about whether the target electronic tag needs authentication registration.

It may also be understood as that, in this application, the first information may be delivered by a network side. For example, the data network, the core network, the base station, or the like sends the first information to the reader, and the reader forwards the first information to the electronic tag. Alternatively, the inventory indication information #1 sent by a network side does not include the first information. The reader directly delivers the first information to the electronic tag. Alternatively, indication information of the first information is delivered to the reader, and the reader decodes the indication information to generate the first information.

In this step, for example, the reader may send select (select) signaling, query (Query) signaling, paging signaling, other signaling, or the like to the electronic tag. The first indication information may be carried in the foregoing signaling.

In this application, as described above, there may be one or more electronic tags, and the one or more electronic tags may receive the inventory indication information #1. Because the inventory indication information #1 includes the first information, and the first information is used to determine the target electronic tag, the target electronic tag may subsequently initiate the random access to the reader.

Step 404: The target electronic tag initiates the random access request to the reader.

For example, the target electronic tag sends a first message to the reader, to perform the random access. For example, the first message may be RN16 signaling, a random number, or the like. The first message indicates that the tag is a tag meeting a selection condition of the reader. Therefore, a random access message is sent.

In this application, a name of the first message may be the random access request, or may be a response message of the inventory indication information #1. A specific name of the first message is not limited in this application.

In an example, if the inventory indication information #1 includes the passive tag type information, it indicates that only the passive tag is selected to initiate a random access request to the reader, or only the passive tag meeting the specific condition is selected to initiate a random access request to the reader. In this case, the passive tag may initiate the random access request to the reader. In another implementation, the passive tag type information indicates that the reader supports the passive tag in initiating the random access request, in other words, indicates that the passive tag can access the reader, and implicitly indicates that the reader may also support the tag of the another type in initiating a random access request.

In an example, if the inventory indication information #1 includes the semi-passive tag type information, it indicates that only the semi-passive tag is selected to initiate a random access request to the reader, or only the semi-passive tag meeting the specific condition is selected to initiate a random access request to the reader. In another implementation, the semi-passive tag type information may indicate that the reader supports the semi-passive tag in initiating the random access request, in other words, indicates that the semi-passive tag can access the reader, and implicitly indicate that the access of the tag of the another type may also be supported.

For implementations of various types of information included in the inventory indication information #1, refer to descriptions in step 401. For brevity of description, details are not described herein again.

In some embodiments, when initiating the random access request to the reader, the target electronic tag may further report capability information of the target electronic tag. For example, the first message may include the capability information of the target electronic tag.

In some other embodiments, after the random access succeeds, the target electronic tag may send the capability information to the reader.

In this application, the capability information includes one or more of the following: for example, type information of the target electronic tag, information about whether the target electronic tag supports polar encoding, and information about whether the target electronic tag supports authentication registration.

In some embodiments, step 405 is further included: The reader determines the configuration information, where the configuration information is used to configure information used by the target electronic tag to perform data transmission or signaling transmission.

In an implementation, the reader may determine the configuration information based on the inventory indication information #1.

In an implementation, if the target electronic tag reports the capability information, in this case, the reader may alternatively determine the configuration information based on the capability information of the target electronic tag.

In another implementation, the reader may determine the configuration information based on the inventory indication information and the capability information.

In this application, the configuration information may include at least one of the following: for example, the authentication registration indication information, the polar code application indication information, and the rate configuration indication information. The authentication registration indication information may indicate that the target electronic tag needs to initiate the registration procedure to the core network during the data transmission; the polar code application indication information may indicate that the target electronic tag uses, during the uplink data and/or downlink data transmission, the polar code to perform the data transmission; and the rate configuration indication information may indicate the information transmission rate or code rate used by the target electron during the uplink data and/or downlink data transmission.

Based on the foregoing technical solution, in this application, during random access, the target second device may further report capability information of the target second device, so that the first device promptly obtains the capability information of the target second device, and subsequently determines, based on the capability information of the target second device, configuration information needed for data transmission. In this way, transmission performance and transmission reliability are improved.

Step 406: The reader sends a second message to the target electronic tag, where the second message includes the configuration information.

For example, the second message may be a conflict resolution message, or the second message may be an acknowledgment message, or the like. The second message may be determined based on the first indication information. For example, if the first indication information includes a passive tag type, indicating that the passive tag is selected for access. In this case, in the second message, corresponding configuration may be performed on the passive tag that performs access or attempts to perform access.

Step 407: The target electronic tag receives the configuration information, and performs uplink data transmission based on the configuration information.

According to the method provided in this application, a command triggered by inventory includes indication information of electronic tags having different capabilities and electronic tags of different types, so that a random access process can be initiated based on a type or a capability of a tag. In other words, the reader may select different tags to access the reader based on electronic tags having different capabilities or electronic tags of different types. In addition, the reader may enable different procedures, or configure different parameters or the like based on tags having different capabilities or tags of different types, so that the electronic tag better performs data transmission. In this way, data transmission performance is improved.

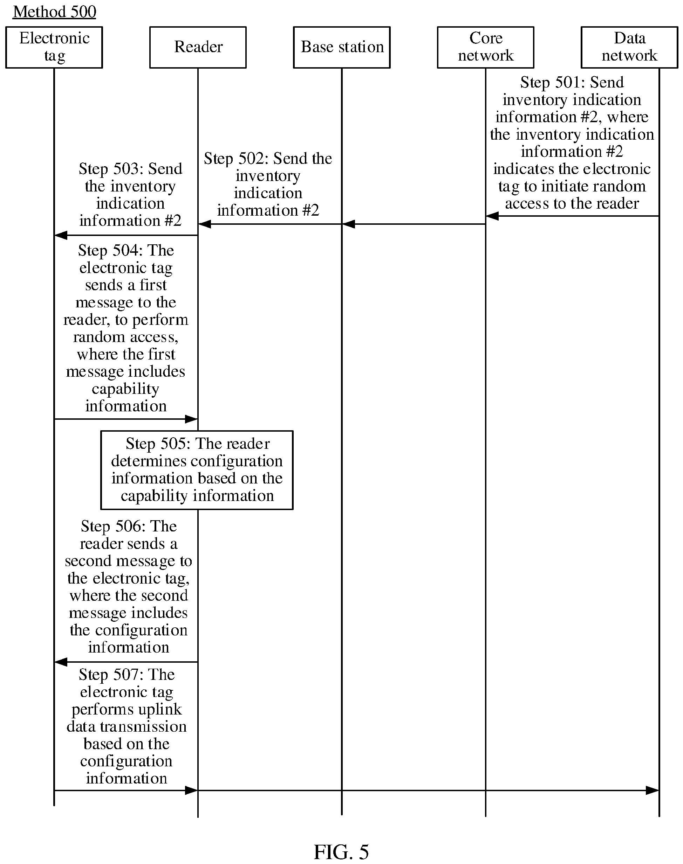

FIG. 5 is a diagram of a communication method 500 according to this application. As shown in FIG. 5, the method includes the following steps.

Step 501: A data network sends inventory indication information #2 to a core network.

In this application, the inventory indication information #2 may indicate that a group of tags are selected to randomly access a reader, or the inventory indication information #2 indicates that all tags may randomly access a reader.

Step 502: After receiving the inventory indication information #2 from the data network, the core network forwards the indication information #2 to the reader.

In an example, the core network may first send the inventory indication information #2 to a base station, and then the base station forwards the inventory indication information #2 to the reader. If the reader is the base station, the core network may directly send the inventory indication information #2 to the reader.

Step 503: After receiving the inventory indication information #2, the reader sends the inventory indication information #2 to a tag.

For example, the inventory indication information #2 may be carried in select (select) signaling, query (Query) signaling, paging signaling, or other signaling.

In this application, in an implementation, step 501 to step 503 are optional.

Step 504: After receiving the inventory indication information #2, the electronic tag sends a first message to the reader, to perform random access.

In this embodiment of this application, the first message may include capability information of the electronic tag, and the capability information includes one or more of the following: type information of the electronic tag (for example, a passive electronic tag type, a semi-passive electronic tag type, or an active electronic tag type), information about whether the electronic tag supports polar encoding, and information about whether the electronic tag supports authentication registration. The first message indicates a response message that the tag meets inventory indication sent by the reader.

In an example, capability information of an electronic tag #1 may include one or more of the following information: The electronic tag #1 is a passive electronic tag type, the electronic tag #1 supports polar encoding, and the electronic tag #1 does not support authentication registration. For example, capability information of an electronic tag #2 may include: The electronic tag #2 is an active electronic tag type, the electronic tag #2 supports polar encoding, and the electronic tag #2 does not support authentication registration. In other words, in this embodiment, one or more electronic tags may report capability information in a random access process. For example, a passive tag may also indicate that an authentication registration procedure is not supported.

For example, in the random access process of the electronic tag, an example in which the first message is RN16 signaling is used, and the RN16 signaling may include the capability information of the electronic tag. In this application, RN16 may indicate that a 16-bit random number is sent, and a signaling name is not limited, or the signaling name may not be the RN16. In this application, the RN16 is only used as an example.

In an implementation, the first message may be a message in the random access process, or may be a message for reporting a capability of a second device after the random access succeeds.

Step 505: After receiving the first message, the reader determines configuration information of the electronic tag based on the capability information of the electronic tag.

In this application, the configuration information may include at least one of the following: for example, authentication registration indication information, polar code application indication information, and rate configuration indication information. The authentication registration indication information may indicate that the electronic tag needs to initiate a registration procedure to the core network during data transmission; the polar code application indication information may indicate that the electronic tag uses a polar code to perform data transmission during uplink data and/or downlink data transmission; and the rate configuration indication information may indicate an information transmission rate or code rate used by the electron during uplink data and/or downlink data transmission.

In an example, the electronic tag #1 is used as an example. The reader may determine configuration information of the electronic tag #1 based on the capability information of the electronic tag #1. For example, the configuration information of the electronic tag #1 may be that the polar encoding is used during data transmission, and the electronic tag #2 does not need to initiate a registration procedure to the core network during data transmission. In addition, the configuration information may further include an uplink data transmission rate of the electronic tag #2.

Step 506: The reader sends a second message to the electronic tag, where the second message includes the configuration information of the electronic tag.

In this application, the second message may be, for example, an acknowledgment (acknowledgment, ACK) message, a contention resolution message, or another message.

Step 507: After receiving the second message, the electronic tag performs uplink data transmission based on an indication of the configuration information.

For example, if the reader configures a registration procedure, a configured electronic tag needs to initiate the registration procedure. For another example, if the reader configures polar encoding, the electronic tag may use a polar when sending data to the reader. For example, the polar may be used when electronic product code (electronic product code, EPC) is sent. Specifically, if it is indicated that the polar encoding is supported in uplink, configuration may be performed on the electronic tag to use the polar encoding in the uplink. For example, a code rate or the like is configured. Alternatively, it may be indicated that the polar encoding is supported in downlink, and corresponding configuration is performed on the electronic tag. Alternatively, a terminal indicates whether the polar encoding is supported in uplink or downlink, or is supported in both uplink and downlink, and the base station performs configuration to use the polar encoding in the uplink or the downlink, or performs configuration to use the polar encoding in both the uplink and the downlink.

In addition, the reader may first send, during sending of a message such as an inventory command or the like, configuration performed on the polar encoding, such as a code rate or the like. A tag meeting a selection or access condition of the inventory command stores the configuration information. The tag subsequently reports a capability of the tag, and the base station may send the configuration information to the tag by using the foregoing sent configuration information. For example, the terminal may report a capability in a first message, and the base station may configure the tag in a contention resolution message for use.

According to the method provided in this application, the electronic tag actively reports the capability information in the random access process, so that the reader may perform corresponding configuration based on a capability of the tag. In other words, before performing service data transmission, the electronic tag may first report the capability information, so that the reader can promptly obtain the capability information of the terminal and perform corresponding configuration. In this way, transmission performance and transmission reliability are improved.

It should be noted that, in this application, "when" and "if" both mean that a device performs corresponding processing in an objective case, and are not intended to limit time, and do not need a determining action during implementation by the device, and do not mean that there is another limitation.

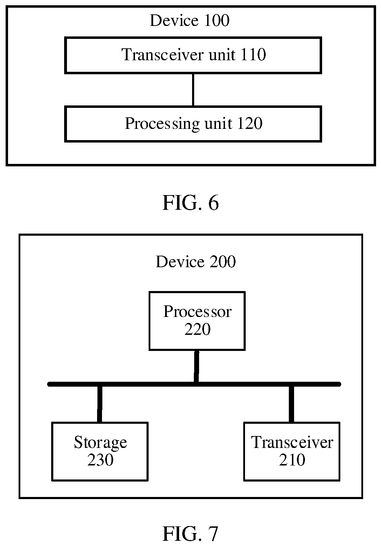

The communication method provided in embodiments of this application is described above in detail with reference to FIG. 3 to FIG. 5. The following describes a communication device provided in embodiments of this application with reference to FIG. 6 and FIG. 7. It should be understood that descriptions of the device embodiments correspond to descriptions of the method embodiments. Therefore, for content that is not described in detail, refer to the foregoing method embodiments. For brevity, details are not described herein again.

The foregoing mainly describes the solutions provided in embodiments of this application from a perspective of interaction between nodes. It may be understood that, to implement the foregoing functions, each node, for example, a terminal device or a network device, includes a corresponding hardware structure and/or software module for performing each function. A person skilled in the art should be aware that, with reference to the examples described in embodiments disclosed in this specification, units and algorithm steps can be implemented by hardware or a combination of hardware and computer software in this application. Whether a function is performed by the hardware or the hardware driven by the computer software depends on particular applications and design constraints of the technical solutions. A person skilled in the art may use different methods to implement the described functions for each particular application, but it should not be considered that this implementation goes beyond the scope of this application.

In embodiments of this application, the terminal device or the terminal device may be divided into function modules based on the foregoing method examples. For example, each function module may be obtained through division based on each corresponding function, or two or more functions may be integrated into one processing module. The foregoing integrated module may be implemented in a form of hardware, or may be implemented in a form of a software function module. It should be noted that division into the modules in embodiments of this application is an example, is merely division into logical functions, and may be other division during actual implementation. The following provides descriptions by using an example in which each function module is obtained through division based on each corresponding function.

FIG. 6 is a block diagram of a communication device 100 according to an embodiment of this application. As shown in the figure, the device 100 may include a transceiver unit 110 and a processing unit 120.

In a possible design, the device 100 may be the second device or the target second device (for example, a terminal device) in the foregoing method embodiments, or may be a chip configured to implement a function of the terminal device in the foregoing method embodiments. It should be understood that the device 100 may correspond to the terminal devices in the method 300, the method 400, and the method 500 according to embodiments of this application, and the device 100 may perform steps corresponding to the terminal devices in the method 300, the method 400, and the method 500 in embodiments of this application. It should be understood that a specific process of performing the foregoing corresponding steps by each unit is described in detail in the foregoing method embodiments. For brevity, details are not described herein again.

Specifically, the transceiver unit is configured to receive first indication information. The first indication information includes first information, the first information is used to determine a target second device, and the first information includes at least one or more of the following: first type information of the target second device, polar encoding information of the target second device, and authentication registration information of the target second device. The first indication information indicates that the first device selects the target second device to initiate a random access request, or the first indication information indicates that the first device supports the target second device in initiating a random access request; and the target second device is a second device meeting one or more pieces of information in the first information. When the second device is the target second device, the transceiver unit is further configured to initiate a random access request.

In an implementation, the transceiver unit is configured to send a first message, to perform random access. The first message includes capability information of the second device, and the capability information includes one or more of the following: type information of the second device, information about whether the second device supports polar encoding, and information about whether the second device supports authentication registration.

In an implementation, the transceiver unit is configured to send the capability information. The capability information includes one or more of the following: type information of the second device, information about whether the second device supports polar encoding, and information about whether the second device supports authentication registration.

In an implementation, the transceiver unit is further configured to receive configuration information. The configuration information is determined by the first device based on the first indication information and/or the capability information, and the configuration information is used to configure information used by the second device to perform data transmission or signaling transmission.

In an implementation, the transceiver unit is configured to receive a second message. The second message includes the configuration information, and the second message is specifically a conflict resolution message or an acknowledgment message of the random access request.

In another possible design, the device 100 may be the first device (for example, a reader or a network device) in the foregoing method embodiments, or may be a chip configured to implement a function of the second device in the foregoing method embodiments. It should be understood that the device 100 may correspond to the second devices in the method 300, the method 400, and the method 500 according to embodiments of this application, and the device 100 may perform steps corresponding to the network devices in the method 300, the method 400, and the method 500 in embodiments of this application. It should be understood that a specific process of performing the foregoing corresponding steps by each unit is described in detail in the foregoing method embodiments. For brevity, details are not described herein again.

Specifically, the transceiver unit is configured to send first indication information. The first indication information includes first information, the first information is used to determine a target second device, and the first information includes at least one or more of the following: first type information of the target second device, polar encoding information of the target second device, and authentication registration information of the target second device. The first indication information indicates that the first device selects the target second device to initiate random access, or the first indication information indicates that the first device supports the target second device in initiating random access; and the target second device is a second device meeting one or more pieces of information in the first information. The transceiver unit is further configured to receive a random access request from the second device. The second device is the target second device.

In an implementation, the transceiver unit is configured to receive a first message. The first message includes capability information of the second device. The capability information includes one or more of the following: type information of the second device, information about whether the second device supports polar encoding, and information about whether the second device supports authentication registration.

In an implementation, the transceiver unit is configured to receive the capability information. The capability information includes one or more of the following: the type information of the second device, the information about whether the second device supports the polar encoding, and the information about whether the second device supports the authentication registration.

In an implementation, the processing unit is configured to determine configuration information based on the first indication information and/or the capability information. The configuration information is used to configure information used by the second device to perform data transmission or signaling transmission. The transceiver unit is configured to send the configuration information.

In an implementation, the transceiver unit is configured to send a second message. The second message includes the configuration information, and the second message is specifically a conflict resolution message or an acknowledgment message of the random access request.

FIG. 7 is a block diagram of a communication device 200 according to an embodiment of this application. As shown in the figure, the device 200 includes at least one processor 220. The processor 220 is coupled to a storage, and is configured to execute instructions stored in the storage, to send a signal and/or receive a signal. Optionally, the device 200 further includes a storage 230, configured to store instructions. Optionally, the device 200 further includes a transceiver 210, and the processor 220 controls the transceiver 210 to send a signal and/or receive a signal.

It should be understood that the processor 220 and the storage 230 may be combined into one processing device, and the processor 220 is configured to execute program code stored in the storage 230 to implement the foregoing functions. During specific implementation, the storage 230 may also be integrated into the processor 220, or may be independent of the processor 220.

It should be further understood that the transceiver 210 may include a transceiver (or referred to as a receiver machine) and a transmitter (or referred to as a transmitter machine). The transceiver may further include an antenna, and there may be one or more antennas. The transceiver 210 may be a communication interface or an interface circuit.

Specifically, the transceiver 210 in the device 200 may correspond to the transceiver unit 110 in the device 100, and the processor 220 in the device 200 may correspond to the processing unit 120 in the device 200.

It should be understood that specific processes of performing the foregoing corresponding steps by each transceiver and processor is described in detail in the foregoing method embodiments. For brevity, details are not described herein again.

In an implementation process, steps in the foregoing methods maybe completed by using a hardware integrated logical circuit in the processor, or by using instructions in a form of software. The steps of the methods disclosed with reference to embodiments of this application may be directly embodied as being performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, a register, or the like. The storage medium is located in the storage. The processor reads information in the storage, and completes the steps of the foregoing methods in combination with hardware of the processor. To avoid repetition, details are not described herein again.

It should be noted that the processor in embodiments of this application may be an integrated circuit chip and has a signal processing capability. In an implementation process, the steps in the foregoing method embodiments may be completed by using the hardware integrated logical circuit in the processor, or by using the instructions in the form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The methods, the steps, and the logical block diagrams disclosed in embodiments of this application may be implemented or performed. The general-purpose processor may be a microprocessor, or the processor may be any conventional processor or the like. The steps of the methods disclosed with reference to embodiments of this application may be directly embodied as being performed by a hardware decoding processor, or may be performed by a combination of hardware and software modules in the decoding processor. The software module may be located in a mature storage medium in the art, such as a random access memory, a flash memory, a read-only memory, a programmable read-only memory, an electrically erasable programmable memory, a register, or the like. The storage medium is located in the storage. The processor reads information in the storage, and completes the steps of the foregoing methods in combination with hardware of the processor.

It should be understood that the storage in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct ram-bus RAM, DR RAM). It should be noted that the storage of the system and methods described in this specification aims to include but is not limited to these storages and any other storage of a proper type.

According to the methods provided in embodiments of this application, this application further provides a computer program product. The computer program product stores computer program code. When the computer program code is run on a computer, the computer is enabled to perform the method in any one of the embodiments of the method 300, the method 400, and the method 500.

According to the methods provided in embodiments of this application, this application further provides a computer-readable medium. The computer-readable medium stores program code. When the program code is run on a computer, the computer is enabled to perform the method in any one of the embodiments of the method 300, the method 400, and the method 500.

According to the methods provided in embodiments of this application, this application further provides a system. The system includes the foregoing device or device.

All or some of the foregoing embodiments may be implemented by using software, hardware, firmware, or any combination thereof. When the software is used to implement the foregoing embodiments, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, microwave, or the like) manner. The computer-readable storage medium may be any usable medium accessible to the computer, or a data storage device, such as a server a data center, or the like integrating one or more usable media that are included. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

A network side device and the terminal device in the foregoing device embodiments correspond to a network side device or the terminal device in the method embodiments. A corresponding module or unit performs a corresponding step. For example, a communication unit (transceiver) performs a receiving step or a sending step in the method embodiments, a processing unit (processor) may perform a step other than the sending step and the receiving step. For a function of a specific unit, refer to a corresponding method embodiment. There may be one or more processors.

Terms such as "part", "module", "system", or the like used in this specification are used to indicate computer-related entities, hardware, firmware, combinations of hardware and software, software, or software being executed. For example, a part may be, but is not limited to, a process running on a processor, a processor, an object, an executable file, an execution thread, a program, and/or a computer. As illustrated by using figures, both an application running on a computing device and the computing device may be pars. One or more parts may reside in a process and/or an execution thread, and the part may be located on one computer and/or distributed between two or more computers. In addition, these parts may be executed from various computer-readable media that store various data structures. For example, the parts may communicate by using a local and/or remote process and based on a signal having one or more data packets (for example, data from two parts interacting with another part in a local system, a distributed system, and/or across a network such as an internet interacting with another system by using the signal).

A person of ordinary skill in the art may be aware that, with reference to the examples described in embodiments disclosed in this specification, units and algorithm steps can be implemented by electronic hardware or a combination of computer software and electronic hardware. Whether the functions are performed by the hardware or the software depends on the particular applications and the design constraints of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for specific working processes of the foregoing described system, device, and units, refer to corresponding processes in the foregoing method embodiments. Details are not described herein again.

In the several embodiments provided in this application, it should be understood that the disclosed system, device, and methods may be implemented in other manners. For example, the described device embodiments are merely examples. For example, division into the units is merely logical function division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between devices or units may be implemented in electronic, mechanical, or other forms.

Units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or a part contributing to a conventional technology, or some of the technical solutions may be embodied in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, an optical disc, or the like.

The foregoing descriptions are merely specific implementations of this application, but are not intended to limit the protection scope of this application. A modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a second device, first indication information from a first device, wherein the first indication information comprises first information, the first information is used to determine a target second device, and the first information comprises at least one or more of the following: first type information of the target second device, polar encoding information of the target second device, and authentication registration information of the target second device, wherein the first indication information indicates that the first device selects the target second device to initiate a random access request, or the first indication information indicates that the first device supports the target second device in initiating a random access request; and the target second device is a second device meeting one or more pieces of information in the first information; and
when the second device is the target second device, initiating, by the second device, a random access request to the first device.

2. The method according to claim 1, wherein when the first indication information indicates that the first device selects the target second device to initiate random access,
the first type information of the target second device indicates that the first device selects a first-type second device to initiate a random access request;
the polar encoding information of the target second device indicates that the first device selects a second device having a polar encoding capability to initiate a random access request; and
the authentication registration information of the target second device indicates that the first device selects a second device having an authentication registration capability to initiate a random access request.

3. The method according to claim 1, wherein when the first indication information indicates that the first device supports the target second device in performing random access,
the type information of the target second device indicates that the first device supports a first-type second device in initiating a random access request;
the polar encoding information of the target second device indicates that the first device supports a second device having a polar encoding capability in initiating a random access request; and
the authentication registration information of the target second device indicates that the first device supports a second device having an authentication registration capability in initiating a random access request.

4. The method according to any one of claims 1 to 3, wherein the initiating, by the second device, random access to the first device comprises:
sending, by the second device, a first message to the first device, wherein
the first message comprises capability information of the second device, and the capability information comprises one or more of the following: first type information of the second device, information about whether the second device supports polar encoding, and information about whether the second device supports authentication registration.

5. The method according to any one of claims 1 to 3, wherein after the second device successfully performs random access, the method further comprises:
sending, by the second device, capability information to the first device, wherein the capability information comprises one or more of the following: first type information of the second device, information about whether the second device supports polar encoding, and information about whether the second device supports authentication registration.

6. The method according to claim 4 or 5, wherein the method further comprises:
receiving, by the second device, configuration information from the first device, wherein the configuration information is determined by the first device based on the first indication information and/or the capability information, and the configuration information is used to configure information used by the second device to perform data transmission or signaling transmission.

7. The method according to claim 6, wherein the configuration information comprises at least one of the following: authentication registration indication information, polar code application indication information, and rate configuration indication information, wherein
the authentication registration indication information indicates that the second device needs to initiate a registration procedure to a core network during data transmission;
the polar code application indication information indicates that the second device uses a polar code to perform data transmission during uplink data and/or downlink data transmission; and
the rate configuration indication information indicates an information transmission rate or code rate used by the second device during uplink data and/or downlink data transmission.

8. The method according to claim 6 or 7, wherein the receiving, by the second device, configuration information from the first device comprises:
receiving, by the second device, a second message from the first device, wherein the second message comprises the configuration information, and the second message is specifically a conflict resolution message or an acknowledgment message of the random access request.

9. The method according to any one of claims 1 to 8, wherein a first type of the target second device comprises one or more of the following: an active type, a passive type, and a semi-passive type.

10. A communication method, comprising:
receiving, by a second device, second indication information from a first device, wherein the second indication information indicates the second device to initiate a random access request; and
sending, by the second device, a first message to the first device, to perform random access, wherein the first message comprises capability information of the second device, and the capability information comprises one or more of the following: type information of the second device, information about whether the second device supports polar encoding, and information about whether the second device supports authentication registration.

11. The method according to claim 10, wherein the type information of the second device indicates that a type of the second device is a first type, polar encoding information of the second device indicates that the second device supports the polar encoding, and authentication registration information of the second device indicates that the second device supports the authentication registration.

12. The method according to claim 10 or 11, wherein the method further comprises:
receiving, by the second device, configuration information from the first device, wherein the configuration information is determined by the first device based on the capability information, and the configuration information is used to configure information used by the second device to perform data transmission.

13. The method according to any one of claims 10 to 12, wherein the configuration information comprises at least one of the following: authentication registration indication information, polar code application indication information, and rate configuration indication information, wherein
the authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

14. The method according to claim 12 or 13, wherein the receiving, by the second device, configuration information from the first device comprises:
receiving, by the second device, a second message from the first device, wherein the second message comprises the configuration information, and the first message is specifically a conflict resolution message or an acknowledgment message of the random access request.

15. A communication method, comprising:
sending, by a first device, first indication information to a second device, wherein the first indication information comprises first information, the first information is used to determine a target second device, and the first information comprises at least one or more of the following: first type information of the target second device, polar encoding information of the target second device, and authentication registration information of the target second device, wherein the first indication information indicates that the first device selects the target second device to initiate random access, or the first indication information indicates that the first device supports the target second device in initiating random access; and the target second device is a second device meeting one or more pieces of information in the first information; and
receiving, by the first device, a random access request from the second device, wherein the second device is the target second device.

16. The method according to claim 15, wherein when the first indication information indicates that the first device selects the target second device to initiate the random access,
the first type information of the target second device indicates that the first device selects a first-type second device to initiate a random access request;
the polar encoding information of the target second device indicates that the first device selects a second device having a polar encoding capability to initiate a random access request; and
the authentication registration information of the target second device indicates that the first device selects a second device having an authentication registration capability to initiate a random access request.

17. The method according to claim 15, wherein when the first indication information indicates that the first device supports the target second device in performing the random access,
the first type information of the target second device indicates that the first device supports a first-type second device in initiating a random access request;
the polar encoding information of the target second device indicates that the first device supports a second device having a polar encoding capability in initiating a random access request; and
the authentication registration information of the target second device indicates that the first device supports a second device having an authentication registration capability in initiating a random access request.

18. The method according to any one of claims 15 to 17, wherein the receiving, by the first device, a random access request from the second device comprises:
receiving, by the first device, a first message from the second device, wherein
the first message comprises capability information of the second device, and the capability information comprises one or more of the following: type information of the second device, information about whether the second device supports polar encoding, and information about whether the second device supports authentication registration.

19. The method according to any one of claims 15 to 18, wherein after the second device successfully performs random access, the method further comprises:
receiving, by the first device, the capability information from the second device, wherein the capability information comprises one or more of the following: the type information of the second device, the information about whether the second device supports the polar encoding, and the information about whether the second device supports the authentication registration.

20. The method according to any one of claims 15 to 19, wherein the method further comprises:
determining, by the first device, configuration information based on the first indication information and/or the capability information, wherein the configuration information is used to configure information used by the second device to perform data transmission or signaling transmission; and
sending, by the first device, the configuration information to the second device.

21. The method according to any one of claims 15 to 20, wherein the configuration information comprises at least one of the following: authentication registration indication information, polar code application indication information, and rate configuration indication information, wherein
the authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

22. The method according to any one of claims 15 to 21, wherein the sending, by the first device, the configuration information to the target second device comprises:
sending, by the first device, a second message to the second device, wherein the second message comprises the configuration information, and the second message is specifically a conflict resolution message or an acknowledgment message of the random access request.

23. The method according to any one of claims 1 to 8, wherein a first type of the target second device comprises one or more of the following: an active type, a passive type, and a semi-passive type.

24. A communication method, comprising:
sending, by a first device, second indication information to a second device, wherein the second indication information indicates the second device to initiate a random access request; and
receiving, by the first device, a first message from the second device, wherein the first message comprises capability information of the second device, and the capability information comprises one or more of the following: type information of the second device, information about whether the second device supports polar encoding, and information about whether the second device supports authentication registration.

25. The method according to claim 24, wherein the type information of the second device indicates that a type of the second device is a first type, polar encoding information of the second device indicates that the second device supports the polar encoding, and authentication registration information of the second device indicates that the second device supports the authentication registration.

26. The method according to claim 24 or 25, wherein the method further comprises:
determining, by the first device, configuration information based on the capability information, wherein the configuration information is used to configure information used by the second device to perform data transmission; and
sending, by the first device, the configuration information to the second device.

27. The method according to any one of claims 24 to 26, wherein the configuration information comprises at least one of the following: authentication registration indication information, polar code application indication information, and rate configuration indication information, wherein
the authentication registration indication information indicates that the second device needs to initiate a registration procedure to a core network during data transmission; the polar code application indication information indicates that the second device uses a polar code to perform data transmission during uplink data and/or downlink data transmission; and the rate configuration indication information indicates an information transmission rate or code rate used by the second device during uplink data and/or downlink data transmission.

28. The method according to claim 26 or 27, wherein the sending, by the first device, the configuration information to the second device comprises:
sending, by the first device, a second message to the second device, wherein the second message comprises the configuration information, and the first message is specifically a conflict resolution message or an acknowledgment message of the random access request.

29. A communication apparatus, comprising a unit configured to perform the method according to any one of claims 1 to 9 or any one of claims 10 to 14.

30. A communication apparatus, comprising a unit configured to perform the method according to any one of claims 15 to 23 or any one of claims 24 to 28.
